# FASCICULE DE BREVET EUROPEEN

(11) **EP 1 958 418 B1**
(45) Date de publication et mention de la délivrance du brevet: **14.02.2018**
(21) Numéro de dépôt: 06831171.1
(22) Date de dépôt: 24.11.2006
(51) Int. Cl.: H04L 29/06, H04M 7/00

(54) **ENTITE ELECTRONIQUE PORTABLE DESTINEE A ETABLIR UNE COMMUNICATION VOIX SUR IP SECURISEE**
TRAGBARE ELEKTRONISCHE ENTITÄT ZUM AUFBAUEN EINER GESICHERTEN SPRACHKOMMUNIKATION ÜBER IP
PORTABLE ELECTRONIC ENTITY FOR SETTING UP SECURED VOICE COMMUNICATION OVER IP

(30) Priorité: 25.11.2005 FR 0511983
(43) Date de publication de la demande: 20.08.2008
(73) Titulaire: OBERTHUR TECHNOLOGIES, 92700 Colombes (FR)
(72) Inventeur: BERTIN, Marc, F-78720 La Celle les Bordes (FR); ALZAI, Eric, F-13530 Trets (FR)
(74) Mandataire: Santarelli
(86) Numéro de dépôt international: PCT/FR2006/002585
(87) Numéro de publication internationale: WO 2007/060334

(56) Documents cités:
- US-A1- 2002 196 943
- US-A1- 2003 139 180
- US-A1- 2004 233 901
- US-B1- 6 757 823

## Description

La présente invention se rapporte à la sécurisation d'une communication établie entre une entité électronique portable et un serveur de communication via une station hôte à laquelle est connectée ladite entité électronique portable.

Elle trouve une application dans la sécurisation d'une communication de type voix sur IP dont l'acronyme anglo-saxon est VoIP. Une telle communication VoIP est une technique de transmission de messages vocaux sur un réseau de communication utilisant le protocole Internet appelé encore *Internet Protocol* ou IP. Dans cette technique de transmission, la voix est intégrée aux données transmises par paquet sur le réseau.

On entend ici par entité électronique portable, une clé électronique ou « *dongle* » qui comprend généralement une interface lui permettant de se connecter à une station hôte, qui peut être une station de travail, un ordinateur, un téléphone mobile, un assistant personnel, ... Le plus souvent, l'interface de la clé électronique est conforme à la norme USB (*Universal Serial Bus*) qui décrit un système de bus série universel développé pour assurer une gestion simple et rapide des échanges de données entre une station hôte et un dispositif périphérique par exemple une entité électronique portable, un clavier ou autre dispositif électronique. L'interface de la clé électronique peut également être conforme à d'autres normes telles que la norme PCMCIA (*Personal Computer Memory Card International Association*) ou la norme MMC (*Multi Media Card*).

Dans la demande de brevet publiée sous le numéro US 2004/0233901 A1, on a déjà décrit une clé électronique établissant une télécommunication de type VoIP à l'aide d'une interface USB connectée à un ordinateur personnel. La clé électronique USB comprend ici un circuit de distribution de données, une unité de stockage, et un module audio radiofréquence sans fil conforme à la technologie de réseaux sans fil appelée WPAN pour « *Wireless Personal Area Network* » et connue également sous le nom de *bluetooth.* Le module audio radiofréquence sans fil de la clé électronique USB permet à un utilisateur équipé d'un microphone et d'une oreillette également conformes à la technologie radiofréquence sans fil d'échanger de la voix à courte distance par liaison radiofréquence.

Après connexion de la clé électronique USB à l'ordinateur hôte et une vérification positive par l'ordinateur à l'égard d'un identifiant associé à la clé électronique USB, une application installée dans l'ordinateur est exécutée et les signaux de voix de l'utilisateur sont reçus par le module radiofréquence de la clé USB et transmis au destinataire à travers le réseau Internet, après conversion analogique - numérique par l'ordinateur.

Une telle clé électronique USB permet ainsi de réaliser une communication téléphonique de type voix sur IP sans fil à l'aide d'une clé électronique USB équipée d'un module radiofréquence conforme à la technologie sans fil *bluetooth.*

La vérification de l'identifiant à l'égard de la clé électronique USB ne confère pas un degré de sécurité totalement satisfaisant dans la mesure où ni la station Hôte, ni le réseau IP entre la station hôte et le serveur de communication ne sont en fait sécurisés. Il en résulte qu'une personne malveillante peut obtenir l'identifiant et/ou le mot de passe associés à la clé USB et les utiliser pour établir frauduleusement une communication voix sur IP entre l'entité et le serveur de communication.

La présente invention remédie à cet inconvénient.

Elle vise notamment à sécuriser de manière forte la communication voix sur IP ainsi établie entre la clé USB et un serveur via la station hôte à laquelle est connectée la clé USB.

Elle porte sur une entité électronique portable comprenant une interface à une station hôte, et des moyens de communication propres à établir une communication voix sur IP entre ladite entité électronique portable ainsi connectée à la station hôte et un serveur de communication relié à ladite station hôte à travers un réseau de communication.

Selon une définition générale de l'invention, l'entité comprend en outre une mémoire propre à contenir un logiciel de gestion de l'application de communication voix sur IP, des moyens de traitement propres à charger et à lancer ledit logiciel de gestion issu de la mémoire dans la station hôte après connexion de l'entité électronique à la station hôte, des moyens d'exécution propres à exécuter l'application de communication selon ledit logiciel de gestion ainsi chargé et lancé, et des moyens de sécurisation propres à sécuriser la communication voix sur IP ainsi établie entre ladite entité électronique portable et le serveur de communication, selon un mode cryptographique choisi. Des procédures de cryptage/décryptage dans la téléphonie sont connues en soi des documents US-2002/0196943 ou US-6 757 823

Ainsi, la session de communication voix sur IP établie entre l'entité électronique portable et le serveur de communication est sécurisée selon un mode cryptographique choisi, ce qui améliore la sécurité de la session de communication par rapport à l'art antérieur précité.

Selon une réalisation, le mode cryptographique choisi est un protocole d'authentification basé sur la résolution d'un défi généré par le serveur de communication et comprenant une séquence à chiffrer avec une clé et la comparaison de la séquence chiffrée ainsi envoyée.

Le protocole d'authentification basé sur la résolution d'un défi, appelée encore protocole « *challenge*/*response »* en anglais, améliore la sécurité dans la mesure où le mot de passe n'est pas transmis en clair sur les réseaux sans fil et/ou IP.

Par exemple, la séquence à chiffrer est un nombre pseudo aléatoire.

Selon une autre réalisation, le mode cryptographique choisi est un protocole d'authentification mutuelle entre le serveur de communication et l'entité électronique portable, ce qui confère encore un degré de sécurité supplémentaire dans l'établissement de la session de communication VoIP entre l'entité électronique portable et le serveur.

Selon un mode de réalisation préféré de l'invention, l'entité comporte un identifiant d'accès à un réseau de téléphonie mobile, les moyens de sécurisation de l'exécution de l'application voix sur IP comportent une clef de sécurisation de l'accès au réseau de téléphonie mobile, et lesdits moyens de sécurisation de l'exécution de l'application voix sur IP sont aptes à sécuriser ladite application voix sur IP entre l'entité (100) et un réseau de téléphonie mobile à l'aide dudit identifiant d'accès à réseau de téléphonie mobile et de ladite clef de sécurisation de l'accès au réseau de téléphonie mobile.

L'interface de l'entité électronique portable à la station hôte est conforme à la norme USB. En variante, l'interface de l'entité électronique portable est conforme à la norme PCMCIA ou la norme MMC.

De préférence, le lancement du logiciel de gestion de la communication voix sur IP est automatique après la connexion de l'entité électronique portable à la station hôte.

Selon d'autres caractéristiques de l'invention, éventuellement combinées :
- l'entité électronique portable comprend en outre des moyens de sécurisation propres à sécuriser au moins en partie l'exécution du logiciel de gestion de l'application de communication voix sur IP ainsi chargé et lancé dans la station hôte selon un mode de sécurisation choisi, ce qui confère un degré de sécurité supplémentaire à l'établissement de la communication voix sur IP ;
- les moyens de sécurisation de l'exécution du logiciel de gestion sont de type chiffrement/déchiffrement
- toute modification apportée au logiciel de gestion est sécurisée ;
- le logiciel de gestion comprend au moins deux parties : un programme principal exécuté par la station hôte et au moins un programme auxiliaire stocké et exécuté dans ladite entité connectée à ladite station hôte, le programme principal générant des commandes d'exécution de tout ou partie dudit programme auxiliaire ;
- le logiciel de gestion est découpé en une pluralité de tronçons, à chaque tronçon étant associé un code d'authentification ;
- le code d'authentification est vérifié, et en cas de vérification négative, le fonctionnement du logiciel de gestion est inhibé ;
- les moyens de sécurisation du logiciel de gestion sont aptes à sécuriser ledit logiciel à l'aide d'éléments aléatoires appartenant au groupe formé par des codes d'authentifications, des zones de découpage dudit logiciel, ce qui confère un degré de sécurité supplémentaire ;
- l'entité électronique portable comprend en outre une interface audio ;
- en cas de vérification négative à l'égard du code d'authentification l'entité est propre à inhiber le fonctionnement de l'interface audio ;
- l'exécution du logiciel de gestion par la station hôte est assortie d'un envoi d'informations prédéterminées à destination de l'entité selon au moins une condition d'envoi et dans laquelle les moyens de sécurisation de l'exécution du logiciel de gestion comprennent des moyens de vérification propres à vérifier ladite condition d'envoi ;
- la condition d'envoi est liée à la fréquence d'envoi des informations prédéterminées et dans laquelle l'entité comprend en outre des moyens de mesure propres à mesurer ladite fréquence d'envoi ;
- la condition d'envoi est liée à la taille des informations et dans laquelle l'entité comprend en outre des moyens de mesure propres à mesurer ladite taille des informations ainsi envoyées.

La présente invention a également pour objet un procédé de communication entre une entité électronique portable comprenant une interface à une station hôte, et un serveur de communication relié à ladite station hôte à travers un réseau de communication, tel que défini par la revendication 10.

Selon un autre aspect de l'invention, le procédé comprend en outre une étape de sécurisation de l'exécution de l'application de communication voix sur IP entre ladite entité électronique portable et le serveur de communication, selon un mode cryptographique choisi.

La présente invention a encore pour objet un support d'informations lisible par un système informatique, éventuellement amovible, totalement ou partiellement, notamment CD-ROM ou support magnétique, tel un disque dur ou une disquette, ou support transmissible, tel un signal électrique ou optique, caractérisé en ce qu'il comporte des instructions d'un programme ordinateur permettant la mise en oeuvre du procédé mentionné ci-avant, lorsque ce programme est chargé et exécuté par un système informatique.

La présente invention a enfin pour objet un programme d'ordinateur stocké sur un support d'informations, ledit programme comportant des instructions permettant la mise en oeuvre du procédé mentionné ci-avant, lorsque ce programme est chargé et exécuté par un système informatique.

D'autres caractéristiques et avantages de l'invention apparaîtront à la lumière de la description détaillée ci-après et des dessins dans lesquels :
- la **figure 1** représente schématiquement les éléments d'une entité électronique portable selon l'invention, et
- la **figure 2** représente schématiquement l'architecture d'une plateforme utilisant une entité de la **figure 1** pour établir une communication voix sur IP avec un serveur selon l'invention.

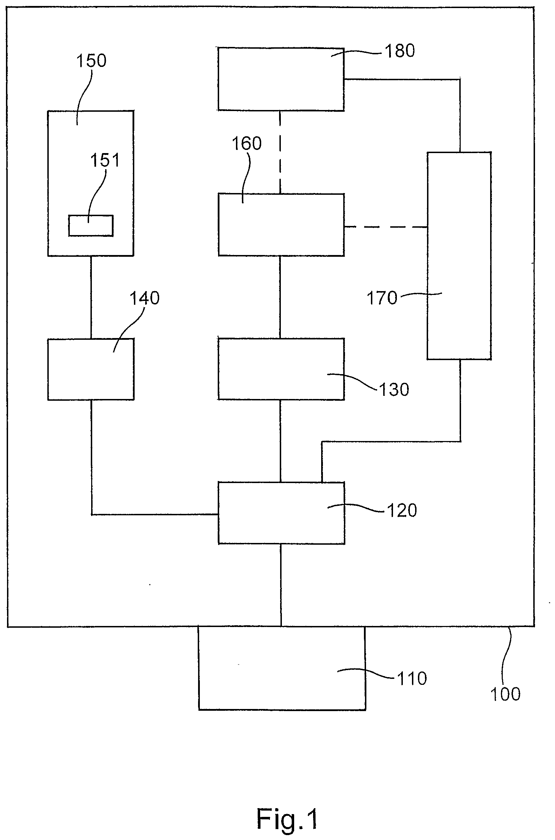

En référence à la **figure 1****,** on a représenté les éléments constitutifs d'une entité électronique portable 100, appelée encore dongle VoIP ou clé électronique USB.

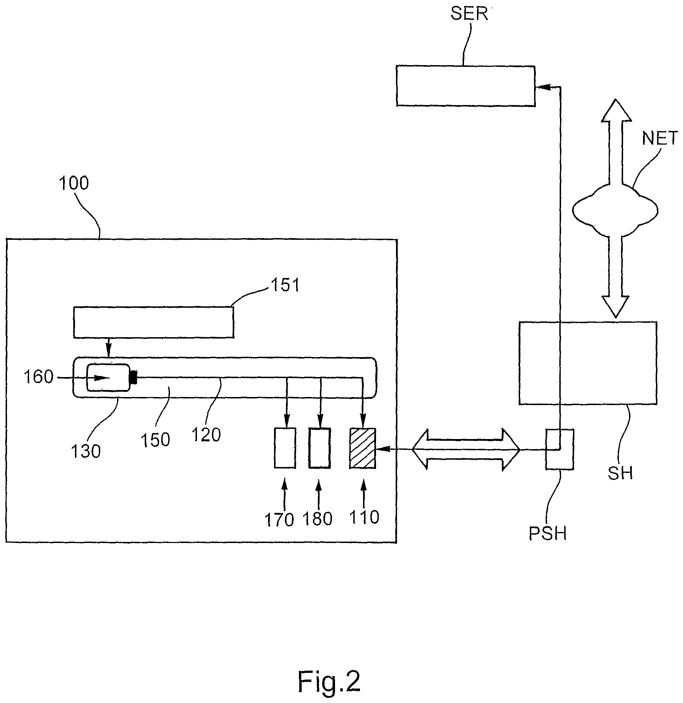

En référence à la **figure 2****,** l'entité 100 comprend une interface 110 pour se connecter au port PSH d'une station hôte SH.

Préférentiellement, l'interface 110 et le port PSH sont des ports conformes à la norme USB. En variante, les interfaces 110 et PSH sont de type PCMCIA ou MMC.

La station hôte SH est susceptible de se connecter à un serveur de communication SER via un réseau de communication NET, tel que le réseau Internet.

On fait à nouveau référence à la **figure 1****.** L'entité électronique portable 100 a une forme générale comparable à celle décrite dans la demande précitée (US 2004/0233901 A1) mais avec une structure interne différente. Par exemple, les circuits qui la composent sont montés typiquement sur un circuit imprimé. Toutes ou à tout le moins certaines fonctionnalités peuvent aussi être regroupées sur un seul circuit intégré. D'autres variantes d'architecture sont bien évidemment à la portée de l'homme du métier.

Un organe formant concentrateur 120, appelé encore *hub* permet de connecter de manière connue plusieurs périphériques conformes à la norme USB au port USB 110.

L'entité 100 comprend un lecteur de carte à puce 130 conforme au protocole USB. Avantageusement, le lecteur de carte à puce 130 est un périphérique USB standard dont les contrôleurs sont intégrés au système d'exploitation de la station Hôte SH, ce qui confère l'avantage d'éviter l'installation préalable de tels contrôleurs lors de l'utilisation de la clé USB 100. Par exemple, le lecteur de carte à puce comprend un contrôleur de type USB CCID (*Chip*/*smart Card Interface Device*, c'est-à-dire dispositif d'interface de circuit de carte à puce) dont le fonctionnement est décrit à l'adresse http://www.microsoft.com/whdc/device/input/smartcard/USB CCID.mspx.

Une carte à puce 160 est logée dans le lecteur de carte à puce 130. La carte à puce 160 est par exemple un module d'identification d'abonné, appelé encore module SIM pour « *Subscriber Identity Module* ». Le lecteur 130 comprend un logement permettant de recevoir le module 160. Un capot amovible (non représenté) permet par exemple d'insérer le module 160 dans le logement approprié.

Comme on le verra plus en détail ci-après, le module d'identification d'abonné 160 comporte des moyens de sécurisation aptes à sécuriser l'application voix sur IP (VoIP) entre le serveur de communication SER et l'entité 100, via la station hôte SH selon un mode de chiffrement choisi.

En variante, la carte à puce 160 est un circuit de type microcontrôleur sécurisé adapté à communiquer selon la norme ISO 7816. Un tel contrôleur sécurisé est lui aussi capable de sécuriser l'application voix sur IP (VoIP) entre le serveur SER de communication et l'entité 100 selon un mode de cryptographiquechoisi.

L'entité 100 comprend en outre une mémoire 150. En pratique, la mémoire 150 comprend au moins une partie non volatile. Par exemple, la mémoire 150 est une mémoire de type Flash de 128 Mo.

La mémoire 150 est contrôlée par un contrôleur 140.

En pratique, le contrôleur 140 est capable d'émuler le fonctionnement d'un lecteur de CD ROM comportant un logiciel de gestion de l'application voix sur IP 151 de type lancement automatique appelé encore *« autorun* ». En d'autres termes, le logiciel de gestion de l'application voix sur IP est exécuté automatiquement par la station hôte lorsque l'entité 100 se connecte à ladite station hôte SH conformément au protocole USB.

En variante, le logiciel de gestion de l'application voix sur IP 151 est chargé dans une zone mémoire non volatile ROM du contrôleur 140.

L'entité comprend en outre une interface audio 180 et un module de traitement audio 170 pour l'établissement de la communication voix sur IP (VoIP) entre le serveur de communication SER et l'utilisateur de la clé électronique USB 100.

En pratique, le module de traitement audio 170 reçoit les données audio (voix) en provenance du serveur SER via la station hôte SH et à destination de l'interface audio 180. Le module de traitement audio 170 reçoit également les données audio en provenance de l'interface audio 180 et à destination du serveur de communication SER.

Par exemple, l'interface audio 180 comprend un microphone et un haut-parleur. En variante, l'interface audio 180 comprend une interface audio radiofréquence du type *bluetooth* ou analogue permettant d'échanger de la voix à distance avec une oreillette radiofréquence portée par l'utilisateur.

Le module de traitement audio 170 comprend des moyens de traitement des données audio de type conversion numérique/analogique, conversion analogique/numérique et amplification. De tels moyens de traitement audio sont bien connus de l'homme du métier.

Un tel module de traitement audio 170 peut être déporté par exemple dans un casque muni d'un microphone et d'une oreillette dans le cas où l'interface audio 180 est de type radiofréquence courte portée.

On va maintenant décrire en référence à la **figure 2****,** l'établissement de la communication voix sur IP (VoIP) à l'aide de l'entité 100 selon l'invention.

Selon un mode de réalisation préféré, le serveur SER est connecté à un réseau de communication mobile, par exemple conforme à la norme GSM *(« global system for mobiles communications »*, pour système mondial de communications mobiles). Dans ce contexte, la connexion avec le réseau de communication mobile est sécurisée selon un mode cryptographique choisi.

Par exemple, le mode cryptographique choisi est un protocole d'authentification basé sur la résolution d'un défi généré par le serveur de communication SER et comprenant une séquence à chiffrer avec une clé et la comparaison de la séquence chiffrée ainsi envoyée.

Le protocole d'authentification basé sur la résolution d'un défi améliore la sécurité de la communication voix sur IP par rapport à l'art antérieur précité sur les réseaux sans fil et/ou IP.

Par exemple, la séquence à chiffrer est un nombre pseudo aléatoire.

Une telle authentification permet ainsi de vérifier les droits de l'entité électronique portable 100. En cas de succès du processus cryptographique d'authentification, la communication voix sur IP est autorisée.

Dans le contexte de la téléphonie mobile, par exemple dans le cas du GSM, le processus cryptographique peut utiliser une fonctionnalité connue sous l'appellation A₃-A₈ qui permet au serveur SER de l'opérateur concerné d'authentifier l'entité électronique mobile 100 qui cherche à se mettre en relation avec lui. Cette fonctionnalité est exécutée ici par la carte à puce SIM 160 placée dans l'entité 100 à partir d'un identifiant d'accès à un réseau de téléphonie mobile mémorisé dans la mémoire de l'entité 100, de préférence dans la mémoire de la carte à puce SIM 160, tel qu'un identifiant IMSI *(« International Mobile Subscriber Identity* » pour Identifiant International de l'Abonné Mobile), défini par la norme GSM, et à partir d'une clef de sécurisation de l'accès à un réseau de téléphonie mobile, également mémorisée dans la mémoire de l'entité 100, de préférence dans la mémoire de la carte à puce SIM 160. Outre l'authentification de l'abonné, la fonctionnalité A₃-A₈ engendre une clé temporaire K_{c} assurant la sécurité de la communication voix sur IP subséquente, entre l'entité 100 et le serveur SER, par cryptage d'une partie du trafic. Ainsi, l'entité 100 comporte des moyens de sécurisation de l'application de communication voix sur IP entre l'entité 100 et un réseau de téléphonie mobile.

Selon une autre réalisation, le mode cryptographique choisi est un protocole d'authentification mutuelle entre le serveur de communication SER et l'entité électronique portable 100 permettant de vérifier leurs identités respectives, ce qui confère encore un degré de sécurité supplémentaire dans l'établissement de la session de communication VoIP entre l'entité électronique portable et le serveur.

En variante, le canal de communication entre l'entité 100 et le serveur SER est crypté par une paire de clés asymétriques. L'entité 100 comprend alors des moyens de chiffrement/déchiffrement qui sont par exemple du type crypto processeur. Un tel crypto processeur peut par exemple être logé dans le module audio 170 et être commandé par la carte à puce 160. Dans ce contexte, la carte à puce 160, après authentification du serveur, peut commander le déchiffrement, respectivement le chiffrement à la volée des données reçues par le serveur, respectivement par l'interface audio 180.

On va maintenir décrire des éléments de sécurisation apportés au logiciel de gestion de l'application voix sur IP.

Le logiciel de gestion de l'application VoIP 151 est chargé automatiquement dans la mémoire vive de la station hôte SH et exécuté par la station hôte à la connexion de l'entité 100.

Ce chargement automatique a lieu lorsque le port 110 de l'entité 100 est engagé dans le port PSH de la station hôte SH.

En variante, l'utilisateur charge manuellement le logiciel 151 sur le disque dur de la station hôte, grâce par exemple à l'interface graphique de la station hôte et le contrôleur 140 qui permet de lire/écrire dans la mémoire 150 de l'entité 100. Dans cette variante, le contrôleur 140 n'a pas besoin d'émuler un CD ROM conformément au protocole USB.

Le logiciel de gestion de l'application voix sur IP 151 peut assurer plusieurs fonctions.

Par exemple, le logiciel 151 gère l'interface homme-machine de l'application VoIP. Ainsi, le logiciel 151 permet à l'utilisateur d'entrer au clavier le numéro de téléphone de la personne appelée, et de l'afficher à l'écran.

Le logiciel 151 permet aussi de gérer la connexion avec le serveur SER et de traiter le signal audio transmis par ledit serveur SER.

L'exécution du logiciel 151 est en outre au moins en partie sécurisée selon l'invention.

Tout d'abord, le chargement et l'exécution du logiciel 151 par la station hôte sont préférentiellement autorisés à la suite d'une authentification du porteur de l'entité électronique portable 100.

Par exemple, l'authentification du porteur de l'entité 100 est de type présentation d'un mode de passe, un identifiant, un code personnel PIN, une clé.

Par exemple, le lancement automatique du logiciel 151 peut comporter une étape de demande de saisie et de vérification d'un code personnel PIN. Cette étape de vérification est avantageusement mise en oeuvre par le contrôleur 140 ou la carte à puce 160.

De même, la modification du logiciel de gestion 151, peut être sécurisée par un mode cryptographique choisi. Par exemple, toute modification est précédée d'une vérification positive entre le serveur SER et l'entité 100 conformément au protocole d'authentification du porteur de l'entité décrit ci-avant.

Dans un autre mode de réalisation préféré de l'invention, le logiciel de gestion 151 peut comprendre au moins deux parties: un programme principal exécuté par la station hôte SH et au moins un programme auxiliaire stocké en mémoire 150 et exécuté par l'entité 100 lorsqu'elle est connectée à ladite station hôte SH.

Dans ce contexte, le programme principal génère des commandes d'exécution de tout ou partie dudit programme auxiliaire après vérification positive conformément au protocole d'authentification du porteur de l'entité décrit ci-avant.

Selon encore une autre variante de réalisation, le logiciel de gestion 151 peut comporter des séquences d'authentification à des instants donnés lors du déroulement de l'application voix sur IP.

Ainsi, le logiciel 151 peut comporter des instructions consistant à envoyer un code d'authentification en provenance de la station hôte SH à destination de la carte à puce 160. Dans le cas où le code d'authentification ainsi reçu ne correspond pas au code d'authentification attendu par la carte 160, la carte à puce 160 envoie une instruction d'inhibition du fonctionnement du module de traitement audio 170.

En variante, l'instruction d'inhibition peut être envoyée à l'interface audio 180 par la carte à puce 160. Pour illustrer ces inhibitions, on a représenté en **figure 1** un lien en traits tiretés entre la carte 160 et le module 170 ainsi qu'entre la carte 160 et l'interface audio 180.

L'instruction d'inhibition peut aussi correspondre à une donnée écrite spécifiquement en mémoire non volatile de la carte 160, pour empêcher ainsi le fonctionnement de l'entité 100.

La sécurisation du logiciel 151 peut aussi comporter des éléments aléatoires pour conférer un degré de sécurité supplémentaire.

En premier lieu, cet aspect aléatoire peut être appliqué dans le cas où le logiciel de gestion 151 comprend des séquences d'authentification, consistant à envoyer des codes d'authentification comme décrit ci-avant. Ces codes d'authentification peuvent être ainsi aléatoires. De même, l'instant de l'envoi de ces codes d'authentification peut aussi être aléatoire, avantageusement dans une plage limitée prédéterminée.

En second lieu, cet aspect aléatoire peut être appliqué dans le cas du partage du logiciel 151 en deux parties, l'une principale exécutée par la station hôte SH, et l'autre auxiliaire exécutée par l'entité 100. Par exemple, la ou les zones de découpage sont ainsi aléatoires. Ce partage aléatoire peut intervenir à chaque chargement du logiciel 151 sur la station hôte SH intervenant par exemple automatiquement à la suite de chaque connexion de la clé 100 à la station hôte SH.

Par exemple, le logiciel 151 est susceptible d'être prédécoupé en plusieurs tronçons dans une zone mémoire de la mémoire 150 ou dans une zone mémoire ROM du contrôleur 140. A chaque tronçon, on associe en outre des instructions de communication permettant la communication entre la station SH et l'entité 100. Cette association intervient par exemple dans le cas du partage du logiciel 151 en plusieurs parties et/ou lors de l'envoi des codes d'authentification décrit ci-avant. On sélectionne ensuite aléatoirement des groupes de tronçons contigus et on exécute uniquement parmi les instructions de communication associées à chaque tronçon, les instructions de communication séparant deux groupes de tronçons ainsi sélectionnés. En pratique, chaque tronçon du logiciel peut avoir une taille différente. Chaque tronçon est constitué de codes écrits en langage machine, assembleur, C, ou Java...

Pour renforcer encore la protection, l'entité 100 peut en outre comporter des moyens de vérification d'une condition sur la fréquence d'un certain type de données communiquées à ladite entité 100 par le logiciel 151 exécuté par la station hôte SH.

Ainsi, l'entité 100 et plus particulièrement la carte à puce 160, est capable de vérifier la fréquence avec laquelle les codes d'authentification sont reçus de la station hôte SH.

La fréquence peut se mesurer par rapport au temps. Dans ce contexte, l'entité 100 comprend une horloge ou un moyen quelconque de mesure de temps. En variante la fréquence peut se mesurer par rapport à une autre grandeur telle que la taille ou le nombre d'octets traité par le module audio 170.

De préférence, la condition sur la fréquence est associée à un seuil ou une fréquence minimum. La notion de fréquence s'apprécie ici au sens large. En effet, on peut démarrer une temporisation dans l'entité 100 à chaque code d'authentification du logiciel 151 reçu de la station SH. A la fin de la temporisation, par exemple au bout d'une minute, s'il n'y a pas eu de nouvelle authentification, une anomalie est détectée entraînant par exemple l'inhibition du fonctionnement du module audio 170 en réponse à une commande issue de la carte à puce 160.

Grâce à l'invention, le porteur de la clé électronique USB 100 peut ainsi se connecter à n'importe quel ordinateur hôte, sans avoir à installer un logiciel de gestion de la communication voix sur IP (contrôleur ou *driver*) ou un équipement audio, et instantanément établir une application voix sur IP, sans se soucier de la configuration dudit ordinateur hôte, ni de la sécurisation de sa session de communication voix sur IP.

## Revendications

1. Entité électronique portable du type clé, comprenant une interface (110) de connexion à un port d'une station hôte (SH), et des moyens de communication propres à exécuter une application de communication de type voix sur IP entre ladite entité électronique portable (100) ainsi connectée à la station hôte (SH) et un serveur de communication (SER) **caractérisée en ce qu'**elle comprend en outre une mémoire (150) propre à contenir un logiciel de gestion de l'application voix sur IP (151), des moyens de traitement propres à charger et à lancer ledit logiciel de gestion (151) issu de la mémoire (150) dans la station hôte (SH) après connexion de l'entité électronique (100) à la station hôte (SH), des moyens d'exécution propres à exécuter l'application de communication selon ledit logiciel de gestion (151) ainsi chargé et lancé, et des moyens de sécurisation de l'application voix sur IP propres à sécuriser l'exécution de l'application de communication voix sur IP entre ladite entité électronique portable (100) et le serveur de communication (SER), selon un mode cryptographique choisi.

2. Entité selon la revendication 1, dans laquelle le mode cryptographique choisi est un protocole d'authentification mutuelle entre le serveur de communication (SER) et l'entité électronique portable (100).

3. Entité selon la revendication 1 ou la revendication 2, dans laquelle l'entité (100) comporte un identifiant d'accès à un réseau de téléphonie mobile, les moyens de sécurisation de l'exécution de l'application voix sur IP comportent une clef de sécurisation de l'accès au réseau de téléphonie mobile, et sont aptes à sécuriser ladite application voix sur IP entre l'entité (100) et le réseau de téléphonie mobile à l'aide dudit identifiant d'accès à ce réseau de téléphonie mobile et de ladite clef de sécurisation de l'accès au réseau de téléphonie mobile.

4. Entité selon l'une des revendications 1 à 3, dans laquelle l'entité (100) comprend une interface (110) à la station hôte (SH) conforme à la norme USB.

5. Entité selon l'une quelconque des revendications 1 à 3, dans laquelle l'entité (100) comprend une interface (110) à la station hôte (SH) conforme à la norme MMC.

6. Entité selon l'une quelconque des revendications 1 à 5, dans laquelle le logiciel de gestion de l'application voix sur IP (151) est à lancement automatique, après la connexion de l'entité électronique portable (100) à la station hôte (SH).

7. Entité selon l'une quelconque des revendications 1 à 6, dans laquelle l'entité comprend en outre des moyens de sécurisation propres à sécuriser au moins en partie l'exécution du logiciel de gestion de l'application voix sur IP (151) ainsi chargé et lancé dans la station hôte (SH) selon un mode de sécurisation choisi.

8. Entité selon la revendication 7, dans lequel les moyens de sécurisation de l'exécution du logiciel de gestion (151) sont aptes à mettre en oeuvre un protocole d'authentification du porteur de l'entité (100) entre ladite entité (100) et la station hôte (SH).

9. Entité selon l'une quelconque des revendications 1 à 6, dans laquelle le mode cryptographique choisi est un protocole d'authentification mutuelle entre le serveur de communication (SER) et l'entité électronique portable (100) et dans laquelle les moyens de sécurisation comportent une carte SIM réalisant ladite authentification auprès d'un réseau de téléphonie mobile.

10. Procédé de communication entre une entité électronique portable (100) du type clé et un serveur de communication (SER) à travers un réseau de communication (NET), cette entité électronique portable du type clé comprenant une interface (110) de connexion à un port d'une station hôte (SH), et des moyens de communication propres à exécuter une application de communication de type voix sur IP entre ladite entité électronique portable (100) ainsi connectée à la station hôte (SH) et le serveur de communication (SER) relié à ladite station hôte (SH) à travers un réseau de communication (NET), **caractérisé en ce qu'**il comprend les étapes suivantes :
- une étape préalable selon laquelle on prévoit une mémoire (150) propre à contenir un logiciel de gestion de l'application voix sur IP (151)
- une étape selon laquelle on charge et on lance ledit logiciel de gestion (151) issu de la mémoire (150) dans la station hôte (SH) après connexion de l'entité électronique à la station hôte,
- une étape selon laquelle on exécute l'application de communication voix sur IP selon ledit logiciel de gestion ainsi chargé et lancé et
- une étape de sécurisation de l'exécution de l'application voix sur IP entre ladite entité électronique portable (100) et le serveur de communication (SER), selon un mode cryptographique choisi.

11. Procédé selon la revendication 10, dans laquelle le mode cryptographique choisi est un protocole d'authentification mutuelle entre le serveur de communication (SER) et l'entité électronique portable (100).

12. Procédé selon la revendication 10 ou la revendication 11, dans laquelle l'entité (100) comporte un identifiant d'accès à un réseau de téléphonie mobile, l'étape de sécurisation de l'exécution de l'application voix sur IP met en oeuvre une clef de sécurisation de l'accès au réseau de téléphonie mobile, et cette étape de sécurisation de l'exécution de l'application voix sur IP est apte à sécuriser ladite application voix sur IP entre l'entité (100) et un réseau de téléphonie mobile à l'aide dudit identifiant d'accès à réseau de téléphonie mobile et de ladite clef de sécurisation de l'accès au réseau de téléphonie mobile.

13. Procédé selon l'une quelconque des revendications 10 à 12, **caractérisé en ce que** le logiciel de gestion de l'application voix sur IP (151) est à lancement automatique, après la connexion de l'entité électronique portable (100) à la station hôte (SH).

14. Procédé selon l'une quelconque des revendications 10 à 13, dans lequel il est prévu en outre de sécuriser au moins en partie l'exécution du logiciel de gestion de l'application voix sur IP (151) ainsi chargé et lancé dans la station hôte selon un mode de sécurisation choisi.

15. Procédé selon la revendication 14, dans lequel la sécurisation de l'exécution du logiciel de gestion est un protocole d'authentification du porteur de l'entité mis en oeuvre entre l'entité (100) et la station hôte (SH).

16. Procédé selon la revendication 14 ou la revendication 15, dans lequel l'étape de sécurisation du logiciel de gestion (151) est en outre apte à sécuriser toute modification apportée audit logiciel de gestion (151).

17. Procédé selon l'une quelconque des revendications 10 à 16, **caractérisé en ce que** le logiciel de gestion comprend au moins un programme principal exécuté par la station-hôte et au moins un programme auxiliaire stocké et exécuté dans ladite entité, le programme principal générant des commandes d'exécution de tout ou partie du programme auxiliaire,

## Patentansprüche

1. Tragbare elektronische Entität in Schlüsselform, umfassend eine Schnittstelle (110) zum Verbinden mit einem Port einer Hoststation (SH) und Kommunikationsmittel, die geeignet sind, eine Kommunikationsanwendung in Voice-over-IP-Form zwischen der tragbaren elektronischen Entität (100), die an die Hoststation (SH) angeschlossen ist, und einem Kommunikationsserver (SER) auszuführen, **dadurch gekennzeichnet, dass** sie überdies umfasst: einen Speicher (150), der geeignet ist, Verwaltungssoftware für die Voice-over-IP-Anwendung (151) zu umfassen, Verarbeitungsmittel, die geeignet sind, nach dem Herstellen der Verbindung der elektronischen Entität (100) mit der Hoststation, die Verwaltungssoftware (151) aus dem Speicher (150) in die Hoststation (SH) zu laden und zu starten, Ausführungsmittel, die geeignet sind, die Kommunikationsanwendung gemäß der geladenen und gestarteten Verwaltungssoftware (151) auszuführen, und Sicherungsmittel für die Voice-over-IP-Anwendung, die geeignet sind, die Ausführung der Voice-over-IP-Kommunikationsanwendung zwischen der tragbaren elektronischen Entität (100) und dem Kommunikationsserver (SER) gemäß einem gewählten kryptografischen Modus zu sichern.

2. Entität nach Anspruch 1, wobei der gewählte kryptografische Modus ein Protokoll zur gegenseitigen Authentifizierung des Kommunikationsservers (SER) und der tragbaren elektronischen Entität (100) ist.

3. Entität nach Anspruch 1 oder Anspruch 2, wobei die Entität (100) eine Zugangskennung für ein Mobilfunknetz umfasst, die Sicherungsmittel für das Ausführen der Voice-over-IP-Anwendung einen Sicherheitsschlüssel für den Zugang zu dem Mobilfunknetz umfassen und geeignet sind, die Voice-over-IP-Anwendung zwischen der Entität (100) und dem Mobilfunknetz mithilfe der Zugangskennung zu diesem Mobilfunknetz und des Sicherheitsschlüssels für den Zugang zu dem Mobilfunknetz zu sichern.

4. Entität nach einem der Ansprüche 1 bis 3, wobei die Entität (100) eine Schnittstelle (110) zu der Hoststation (SH) umfasst, die konform zur USB-Norm ist.

5. Entität nach einem der Ansprüche 1 bis 3, wobei die Entität (100) eine Schnittstelle (110) zu der Hoststation (SH) umfasst, die konform zur MMC-Norm ist.

6. Entität nach einem der Ansprüche 1 bis 5, wobei die Verwaltungssoftware für die Voice-over-IP-Anwendung (151) automatisch gestartet wird, nachdem die Verbindung zwischen der tragbaren elektronischen Entität (100) und der Hoststation (SH) hergestellt wurde.

7. Entität nach einem der Ansprüche 1 bis 6, wobei die Entität überdies Sicherungsmittel umfasst, die geeignet sind, das Ausführen der in die Hoststation (SH) geladenen und gestarteten Verwaltungssoftware für die Voice-over-IP-Anwendung (151) gemäß einem gewählten Sicherungsmodus mindestens teilweise zu sichern.

8. Entität nach Anspruch 7, wobei die Sicherungsmittel für das Ausführen der Verwaltungssoftware (151) geeignet sind, ein Authentifizierungsprotokoll des Trägers der Entität (100) zwischen der Entität (100) und der Hoststation (SH) auszuführen.

9. Entität nach einem der Ansprüche 1 bis 6, wobei der gewählte kryptografische Modus ein Protokoll für die gegenseitige Authentifizierung des Kommunikationsservers (SER) und der tragbaren elektronischen Entität (100) ist, und wobei die Sicherungsmittel eine SIM-Karte umfassen, die die Authentifizierung in einem Mobilfunknetz realisiert.

10. Verfahren zur Kommunikation zwischen einer tragbaren elektronischen Entität (100) in Schlüsselform und einem Kommunikationsserver (SER) über ein Kommunikationsnetz (NET), wobei die tragbare elektronische Entität in Schlüsselform umfasst: eine Schnittstelle (110) zum Verbinden mit einem Port einer Hoststation (SH) und Kommunikationsmittel, die geeignet sind, eine Kommunikationsanwendung in Voice-over-IP-Form zwischen der tragbaren elektronischen Entität (100), die mit der Hoststation (SH) verbunden ist, und dem Kommunikationsserver (SER), der mit der Hoststation (SH) über ein Kommunikationsnetz (NET) verbunden ist, auszuführen, **dadurch gekennzeichnet, dass** es die folgenden Schritte umfasst:
- einen vorhergehenden Schritt, gemäß dem ein Speicher (150) vorgesehen ist, der geeignet ist, eine Verwaltungssoftware für die Voice-over-IP-Anwendung (151) zu umfassen,
- einen Schritt, gemäß dem die Verwaltungssoftware (151) aus dem Speicher (150) in die Hoststation (SH) geladen und gestartet wird, nachdem die elektronische Entität mit der Hoststation verbunden wurde,
- einen Schritt, gemäß dem die Voice-over-IP-Kommunikationsanwendung gemäß der geladenen und gestarteten Verwaltungssoftware ausgeführt wird,
- einen Schritt des Sicherns der Ausführung der Voice-over-IP-Anwendung zwischen der tragbaren elektronischen Entität (100) und dem Kommunikationsserver (SER) gemäß einem gewählten kryptografischen Modus.

11. Verfahren nach Anspruch 10, wobei der gewählte kryptografische Modus ein Protokoll zur gegenseitigen Authentifizierung des Kommunikationsservers (SER) und der tragbaren elektronischen Entität (100) ist.

12. Verfahren nach Anspruch 10 oder Anspruch 11, wobei die Entität (100) eine Zugangskennung für ein Mobilfunknetz umfasst, der Schritt des Sicherns für die Ausführung der Voice-over-IP-Anwendung einen Sicherheitsschlüssel für den Zugang zu dem Mobilfunknetz einsetzt, und wobei der Schritt des Sicherns für die Ausführung der Voice-over-IP-Anwendung geeignet ist, die Voice-over-IP-Anwendung zwischen der Entität (100) und einem Mobilfunknetz mithilfe der Zugangskennung für das Mobilfunknetz und des Sicherheitsschlüssels für den Zugang zu dem Mobilfunknetz zu sichern.

13. Verfahren nach einem der Ansprüche 10 bis 12, **dadurch gekennzeichnet, dass** die Verwaltungssoftware für die Voice-over-IP-Anwendung (151) automatisch gestartet wird, nachdem die Verbindung zwischen der tragbaren elektronischen Entität (100) und der Hoststation (SH) hergestellt wurde.

14. Verfahren nach einem der Ansprüche 10 bis 13, wobei überdies vorgesehen ist, das Ausführen der in die Hoststation geladenen und gestarteten Verwaltungssoftware für die Voice-over-IP-Anwendung (151) mindestens teilweise gemäß einem gewählten Sicherungsmodus zu sichern.

15. Verfahren nach Anspruch 14, wobei das Sichern der Ausführung der Verwaltungssoftware ein Authentifizierungsprotokoll des Trägers der Entität ist, das zwischen der Entität (100) und der Hoststation (SH) ausgeführt wird.

16. Verfahren nach Anspruch 14 oder Anspruch 15, wobei der Schritt des Sicherns der Verwaltungssoftware (151) überdies geeignet ist, jede an der Verwaltungssoftware (151) durchgeführte Modifikation zu sichern.

17. Verfahren nach einem der Ansprüche 10 bis 16, **dadurch gekennzeichnet, dass** die Verwaltungssoftware umfasst: mindestens ein Hauptprogramm, das von der Hoststation ausgeführt wird, und mindestens ein Hilfsprogramm, das in der Entität gespeichert ist und ausgeführt wird, wobei das Hauptprogramm Ausführungsbefehle für die Gesamtheit oder Teile des Hilfsprogramms erzeugt.

## Claims

1. Portable electronic entity of the key type comprising an interface (110) for connection to a port of a host station (SH) and communication means adapted to execute an application for voice over IP type communication between said portable electronic entity (100) connected in this way to the host station (SH) and a communication server (SER), **characterized in that** it further comprises a memory (150) adapted to contain voice over IP application management software (151), processing means adapted to load and launch said management software (151) coming from the memory (150) in the host station (SH) after connection of the electronic entity (100) to the host station (SH), execution means adapted to execute the communication application in accordance with said management software (151) loaded and launched in this way, and means for making the voice over IP application secure adapted to make execution of the application for voice over IP communication between said portable electronic entity (100) and the communication server (SER) secure in accordance with a chosen cryptographic mode.

2. Entity according to claim 1, wherein the chosen cryptographic mode is a protocol for mutual authentication of the communication server (SER) and the portable electronic entity (100).

3. Entity according to claim 1 or claim 2, wherein the entity (100) includes a mobile telephone network access identifier, the means for making execution of the voice over IP application secure include a key for making access to the mobile telephone network secure, and are adapted to make said voice over IP application between the entity (100) and the mobile telephone network secure with the aid of said access identifier to this mobile telphone network and said key for making access to the mobile telephone network secure.

4. Entity according to any one of claims 1 to 3, wherein the entity (100) comprises an interface (110) to the host station (SH) conforming to the USB standard.

5. Entity according to any one of claims 1 to 3, wherein the entity (100) comprises an interface (110) to the host station (SH) conforming to the MMC standard.

6. Entity according to any one of claims 1 to 5, wherein the voice over IP application management software (151) is launched automatically after connection of the portable electronic entity (100) to the host station (SH).

7. Entity according to any one of claims 1 to 6, wherein the entity further comprises means adapted to make at least in part the execution of the voice over IP application management software (151) loaded and launched in the host station (SH) in this way secure in accordance with a chosen security mode.

8. Entity according to claim 7, wherein the means for making execution of the management software (151) secure are adapted to execute a protocol for authentication of the bearer of the entity (100) between said entity (100) and the host station (SH).

9. Entity according to any one of claims 1 to 6, wherein the chosen cryptographic mode is a protocol for mutual authentication of the communication server (SER) and the portable electronic entity (100) and wherein the securing means comprise a SIM card realising said authentication in a mobile telephone network.

10. Method of communication between a portable electronic entity (100) of the key type and a communication server (SER) via a communication network (NET), this portable electronic entity of key type comprising an interface (110) for connection to a port of a host station (SH) and communication means adapted to execute an application for voice over IP type communication between said portable electronic entity (100) connected in this way to the host station (SH) and the communication server (SER) connected to said host station (SH) via a communication network (NET), **characterized in that** it comprises the following steps:
- a preliminary step according to which a memory (150) adapted to contain voice over IP application management software (151) is provided,
- a step according to which said management software (151) coming from the memory (150) is loaded and launched in the host station (SH) after connection of the electronic entity to the host station (SH),
- a step according to which the voice over IP communication application is executed in accordance with said management software loaded and launched in this way, and
- a step of making execution of the application for voice over IP communication between said portable electronic entity (100) and the communication server (SER) secure in accordance with a chosen cryptographic mode.

11. Method according to claim 10, wherein the chosen cryptographic mode is a protocol for mutual authentication of the communication server (SER) and the portable electronic entity (100).

12. Method according to claim 10 or claim 11, wherein the entity (100) includes a mobile telephone network access identifier, the step of making execution of the voice over IP application secure executes a key for making access to the mobile telephone network secure, and this step of making execution of the voice over IP application secure is adapted to make said voice over IP application between the entity (100) and a mobile telephone network secure with the aid of said mobile telephone network access identifier and said key for making access to the mobile telephone network secure.

13. Method according to any one of claims 10 to 12, **characterised in that** the voice over IP application management software (151) is launched automatically after the connection of the portable electronic entity (100) to the host station (SH).

14. Method according to any one of claims 10 to 13, wherein it is furthermore provided to make secure at least in part the execution of the voice over IP application management software (151) loaded and launched in the host station (SH) in this way in accordance with a chosen security mode.

15. Method according to claim 14, wherein making execution of the management software secure is a protocol for authentication of the bearer of the entity executed between the entity (100) and the host station (SH).

16. Method according to claim 14 or claim 15, wherein the step of making the management software (151) secure is further adapted to make any modification made to said management software (151) secure.

17. Method according to any one of claims 10 to 16, **characterised in that** the management software comprises at least one main program executed by the host station and at least one auxiliary program stored and executed in said entity, the main program generating commands for execution of all or part of said auxiliary program.
